## Europäisches Patentamt
## European Patent Office
## Office européen des brevets

(19)

(11) Publication number: **0 146 225**
**A1**

(12) **EUROPEAN PATENT APPLICATION**

(21) Application number: **84306962.6**

(22) Date of filing: **11.10.84**

(51) Int. Cl.⁴: **H 02 M 3/337,** H 05 G 1/12

(30) Priority: **20.10.83 FI 833833**

(43) Date of publication of application: **26.06.85**
**Bulletin 85/26**

(84) Designated Contracting States: **AT BE CH DE FR GB IT LI NL SE**

(71) Applicant: **Orion-yhtymä Oy, Hitsaajankatu 5, SF-00810 Helsinki (FI)**

(72) Inventor: **Seppa, Ismo-Veikko Antero, Metsikkotie 17 b C, SF-01620 Vantaa (FI)**

(74) Representative: **Barlow, Roy James et al, J.A.KEMP & CO. 14, South Square Gray's Inn, London WC1R 5EU (GB)**

(54) **An inverter in an x-ray generator.**

(57) The invention relates to an X-ray generator inverter comprising two alternately working switches (Q1, Q2), which are preferably transistor switches. Between the center tapping of the transformer (M) provided with center tapping in the primary winding and a point between the switches there is connected a direct-current source (E), which, at each given time together with one of the switches (Q1, Q2) and one primary winding side of the transformer (M), forms two symmetrical loops. A matching means (Ch1; Ch2) is connected to each loop in order to modify the waveform of the current. In order that the inverter could work at a rather high frequency, e.g. 40 kHz, without a risk of the switch transistors (Q1, Q2) being damaged, the matching means is implemented as a series inductance having an inductance value so dimensioned that the resonance frequency of the circuit is greater than the working frequency of the inverter, but lower than double the working frequency.

1

An inverter in an X-ray generator

The invention relates to an X-ray generator inverter comprising two alternately working switches, which are preferably transistor switches, a transformer having a primary winding provided with center tapping, and a direct-voltage source connected between the center tapping and a point between the switches, the direct-voltage source, at each time together with one switch and one transformer primary side, forming two symmetrical loops to which there are additionally connected matching means for modifying the waveform of the current.

In a constant-potential X-ray generator working at a high frequency the accelerating voltage of the X-ray tube is formed by means of an inverter, a high-voltage transformer, and a cascade multiplier.

A cascade multiplier is a ladder circuit made up of capacitors and diodes, the purpose of the circuit being to multiply the alternating supply voltage by the desired coefficient and to rectify and filter the alternating current, whereby DC-potential is obtained for the X-ray tube, the ripple of the potential depending on the number of multipliers, the load current, the capacitances of the capacitors, and the frequency used.

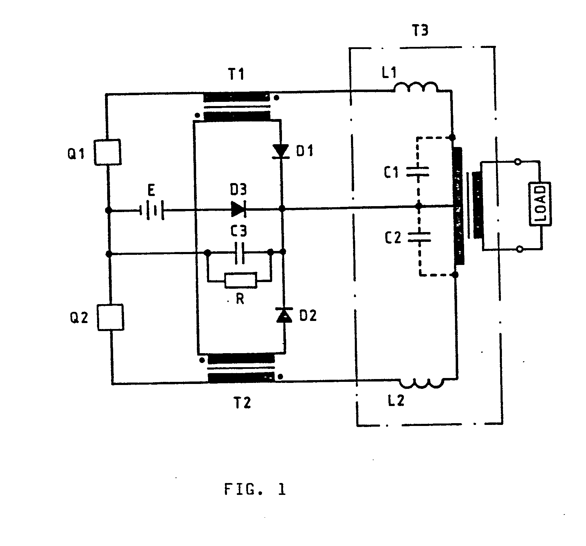

It is previously known (e.g. Japanese Patent 55-117333) to use a circuit according to Figure 1 as an inverter in an X-ray generator. However, the transformers T1 and T2 of the circuit cause the efficiency of the circuit to be relatively low. In addition, the circuit requires a large number of expensive components. Furthermore, the said device does not work at a rather high frequency, e.g. 40 kHz, since the current of the secondary winding side of the storage filter does not have time to fade out before the transistor on the same side begins to conduct. From this there follows a current spike at the beginning of the flow of the current. During this time there is simultaneously a high voltage and a high current across the transistor, in which case the possibility for a so-called second breakdown is great. Thus the circuit is not reliable without alterations when a shift is made to frequencies higher than 20 kHz.

The object of the present invention is to eliminate the disadvantages of known solutions and to provide a circuit having on the one hand improved efficiency and reliability and on the other hand a smaller number of components. In accordance with the invention this is achieved with the characteristics disclosed in Claim 1.

The invention is described below in greater detail with reference to the accompanying drawings, in which

Figure 1 depicts an inverter circuit in accordance with the state of the art,
Figure 2 depicts the connection of an inverter according to the invention to an X-ray tube via a high-voltage transformer and cascade multipliers,
Figure 3 depicts an equivalent circuit of the secondary winding side of the inverter, and
Figure 4 depicts the inverter circuit waveforms.

Referring again to Figure 1, the transformers T1 and T2 are connected to switching elements Q1 and Q2, by means of which the current to the capacitive load 1 is controlled. The diodes D1-D3 are connected between the transformer secondary windings and the voltage source E. At a turn-on of the switches Q1 and Q2, current to the secondary windings of the transformers is blocked, and at a turn-off of the switches the same voltage is summed to the voltage source E and stored in the capacitor C3. The resonance is secured by the dimensioning of the inductances L1 and L2 as well as the leakage capacitances of the output transformer. As described above, the circuit has a disadvantage in its relatively poor efficiency and its expensive structure.

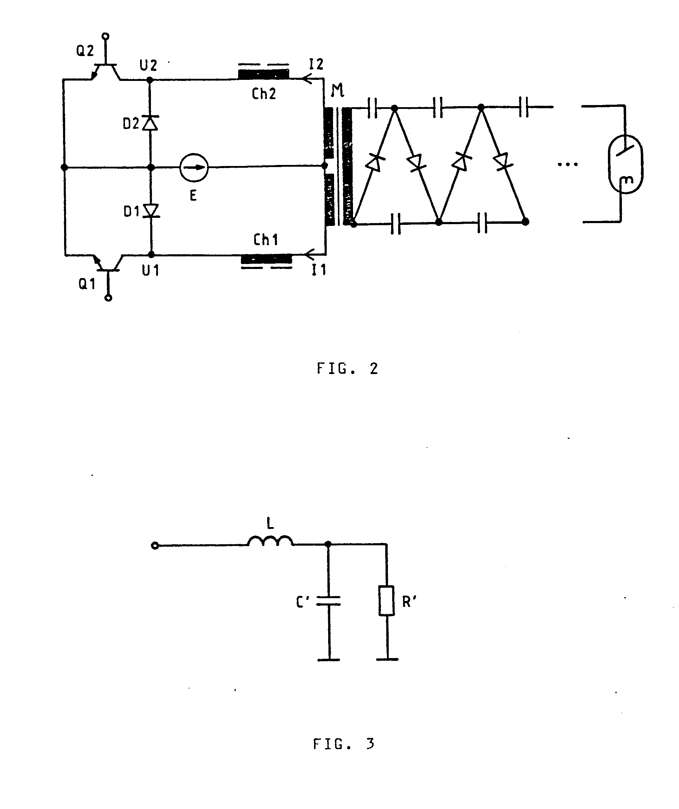

In the circuit according to the invention, depicted in Figure 2, the transistor switches are indicated by Q1 and Q2.

Diodes D1 and D2 protect the transistors and allow the current to flow in the negative direction.

Since the load, as seen from the primary, is capacitive, chokes Ch1 and Ch2 are used in series with the transistors, the purpose of the chokes being to modify the current to the desired waveform in order to cause the power to transfer.

The desired waveform of the current is one in which the switch transistors will not need to turn off the current, i.e.

$$f < f_{res} < 2f \quad , \tag{1}$$

where f is the inverter frequency
$f_{res}$ is the resonance frequency.

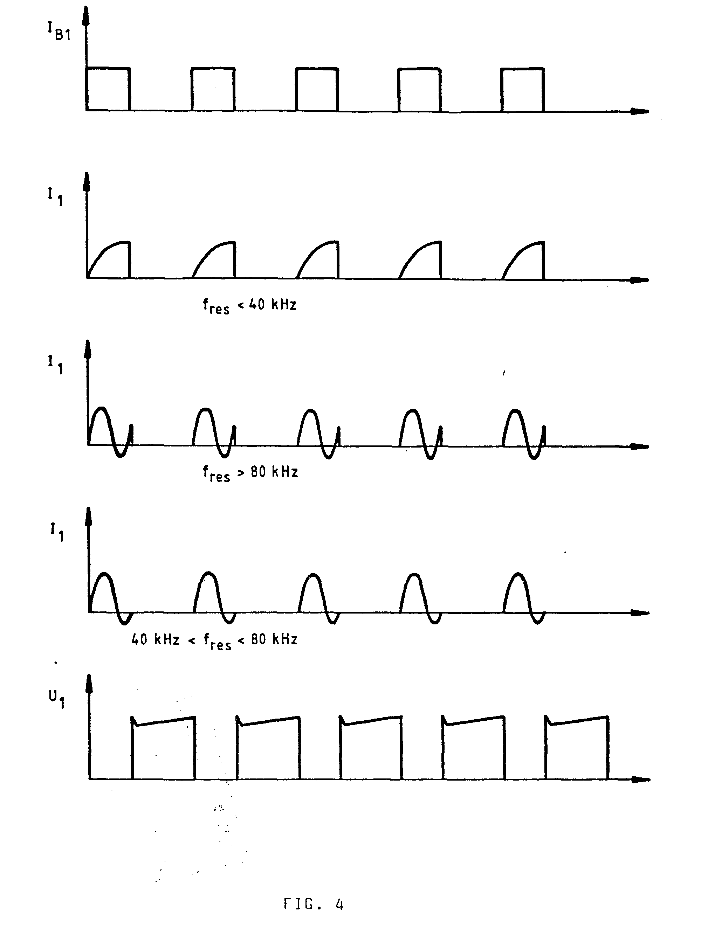

Figure 4 depicts optional waveforms of the current and the voltage.

In Figure 4d, $f_{res}$ is within the said range and will thus not need to turn off the current.

4

A method for controlling the resonance frequency is described below. The X-ray tube can be regarded as a resistor the resistance of which depends on the accelerating voltage and the anode current used, as follows:

$$R = \hat{u}_a / I_a \quad , \tag{2}$$

where R = resistance of the X-ray tube

$\hat{u}_a$ = peak value of the accelerating voltage

$I_a$ = mean of the anode current.

The capacitances of the cascade multipliers and the X-ray tube can be reduced to the primary of the transformer M in a known manner, whereby an equivalent circuit, shown in Figure 3, is obtained on the other side of the inverter.

The components shown in Figure 3 are the capacitances C' reduced to the primary, the resistance R' reduced to the primary, and the inductance L of the primary winding side.

The leakage inductance of the transformer and the effective series resistances of the choke and the capacitors have not been taken into account. The values for the reduced components are obtained as follows:

$$R' = (N1/N2)^2 x \; 1/k \; x \; R \tag{3}$$

$$C' = (N2/N1)^2 x \; k_s k_t k_f k_e \; x \; C \tag{4}$$

where

R' = resistance reduced to the primary

C' = capacitance reduced to the primary

N1 = number of primary convolutions of the high-voltage transformer

N2 = number of secondary convolutions of the high-voltage transformer

k = coefficient of the cascade circuit

R = secondary resistance

C = nominal capacity of the capacitor

$k_s$ = coefficient of the cascade circuit

$k_t$ = temperature coefficient

$k_f$ = frequency coefficient

$k_e$ = field coefficient

The impedance of the equivalent circuit depicted in Figure 3 is

$$Z(jw) = jwL + R'/(1+jwR'C') = (R'-w^2 R'LC' + jwL)/(1+jwL) \quad (5)$$

This is in resonance when

$$wL/(R'-w^2 R'LC') = wR'C' \quad (6)$$

or

$$f_{res} = w_{res}/2\pi = 1/2\pi \sqrt{1/LC' - 1/(R'C')^2} \quad (7)$$

or

$$L = R'^2 C'/(1+(2\pi f_{res} R'C')^2) \quad (8)$$

The limit values for the inductance are obtained on the basis of Formula 8 and Condition 1:

$$R'^2 C'/(1+(4\pi f R'C')^2) < L < R'^2 C'/(1+(2\pi f R'C')^2) \quad (9)$$

For example:

$\hat{u}_a$ = 70 kV  $I_2$ = 10mA  N2/N1 = 25  f = 40 kHz  C = 500 pF
$k_s k_t k_f k_e$ = 2/3, k = 100

$R = 7M\Omega$    $R' = 112\Omega$

$C' = 208$ nF

$19\ \mu H < L < 74\ \mu H$

When an inductance of 30 µH is used, an efficiency of about 90 % is obtained, which is about 15 % better than the efficiency of the so-called storage filter disclosed in the Japanese patent described above. This means a saving of 150 W of power, in which case the inverter components work at a lower temperature, which increases the reliability of the device.

The number of components required is smaller than in Morita's corresponding circuit, and so the cost of the components will be lower.

Claims

1.   An X-ray generator inverter comprising two alternately working switches (Q1, Q2), which are preferably transistor switches, a transformer (M) having a primary winding provided with center tapping, and a direct-voltage source (E) connected between the center tapping and a point between the switches, the direct-current source, at each given time together with one of the switches (Q1, Q2) and one primary winding side of the transformer (M), forming two symmetrical loops to which there are additionally connected matching means (Ch1, Ch2) for modifying the waveform of the current, c h a r a c t e r i z e d   i n   that the matching means (Ch1; Ch2) of each loop consists of a series inductance having an inductance value L within the following limits:

$$R'^2C'/(1+(4\pi fR'C')^2) < L < R'^2C'/(1+(2\pi fR'C')^2) \qquad (9)$$

where
R' is the X-ray tube resistance reduced to the primary of the transformer,
C' is the cascade multiplier capacitance reduced to the primary of the transformer, and
f is the working frequency of the inverter.

2.   An inverter according to Claim 1, c h a r a c t e r - i z e d   i n   that it is dimensioned to work at a frequency of 40 kHz.

FIG. 1

0146225

FIG. 2

FIG. 3

$I_{B1}$

$I_1$

$f_{res} < 40\ kHz$

$I_1$

$f_{res} > 80\ kHz$

$I_1$

$40\ kHz < f_{res} < 80\ kHz$

$U_1$

FIG. 4

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 212 053  (J. SICHENZIA)<br>* Column  1, lines 19-51; column 3, lines 44-68 * | 1 | H 02 M    3/337<br>H 05 G    1/12 |
| | --- | | |
| A | PATENT ABSTRACTS OF JAPAN vol. 4, no. 170, 22nd November 1980, page (E-35) (652); & JP-A-55-117474 (MITSUBISHI DENKI K.K.) 09-09-1980 | 1 | |
| | --- | | |
| A | US-A-4 378 501  (D. COWELL)<br><br>* Claim 1; figure 1 * | | |
| | ----- | | |

**TECHNICAL FIELDS SEARCHED (Int. Cl.4)**

H 02 M    3/00
H 02 M    7/00
H 05 G    1/00

The present search report has been drawn up for all claims

| Place of search | Date of completion of the search | Examiner |
|---|---|---|
| BERLIN | 15-01-1985 | GESSNER E A F |